# EUROPEAN PATENT SPECIFICATION

(11) **EP 3 357 983 B1**
(45) Date of publication and mention of the grant of the patent: **17.06.2020**
(21) Application number: 16851036.0
(22) Date of filing: 05.09.2016
(51) Int. Cl.: C09D 11/40, B41J 2/01, B41M 5/00, C09D 11/322, C09D 11/38, C09D 11/101, C09D 11/34

(54) **INK SET AND IMAGE FORMATION METHOD**
TINTENSATZ UND BILDERZEUGUNGSVERFAHREN
JEU D'ENCRES ET PROCÉDÉ DE FORMATION D'IMAGES

(30) Priority: 30.09.2015 JP 2015193185
(43) Date of publication of application: 08.08.2018
(73) Proprietor: Konica Minolta, Inc., Tokyo 100-7015 (JP)
(72) Inventor: IKEDA, Masashi, Tokyo 100-7015 (JP); MIYANO, Masashi, Tokyo 100-7015 (JP); YAMAGUCHI, Go, Tokyo 100-7015 (JP)
(74) Representative: Henkel & Partner mbB
(86) International application number: PCT/JP2016/075943
(87) International publication number: WO 2017/056860

(56) References cited:
- EP-A1- 2 292 430
- EP-A1- 2 568 020
- WO-A1-2013/157271
- WO-A1-2014/065362
- GB-A- 2 520 595
- JP-A- 2007 237 405
- JP-A- 2010 138 315
- JP-A- 2012 067 179
- JP-A- 2013 057 042

## Description

### Technical Field

The present invention relates to an ink set and an image forming method.

### Background Art

Inkjet recording methods are employed in various fields of printing because images can be simply and inexpensively formed by these methods. As one of the inkjet recording methods, there is a method in which a droplet of an actinic radiation-curable ink having been caused to land on a recording medium is cured by irradiation with actinic radiation (an actinic radiation-curable inkjet method). The actinic radiation-curable inkjet method has attracted attention in recent years because an image having both rubfastness and adhesiveness to a recording medium can be formed on a recording medium having no ink absorbency by this method.

As one method for improving a pinning property of an actinic radiation-curable inkjet ink, there is a method in which a droplet is caused to undergo sol-gel phase transition by adding a gelling agent to the ink (see, for example, PTL 1). In this method, an ink droplet in the form of a liquid is discharged at a high temperature to be caused to land on a recording medium, and at the same time, the ink droplet is cooled to undergo gelation, and thus, combination of dots is suppressed.

Here, if an actinic radiation-curable inkjet ink is used for multi-color printing, the printing is generally performed using an ink set including inks of plural colors of yellow, magenta, cyan, black and the like.

PTL 2 discloses an ink set which is capable of forming an image having excellent substrate-ink and ink-ink adhesion when forming multiple layers and excellent image quality and surface gloss. The ink set comprises (a) a colored ink composition comprising a yellow ink, a magenta ink, a cyan ink and a black ink, and (b) a white ink composition, wherein each ink composition comprises a radically polymerizable compound and a radical polymerization initiator. The radically polymerizable compound comprises an N-vinyl compound and a (meth)acrylate containing a cyclic acetal group, and may further comprise trimethylolpropane triacrylate, an aromatic hydrocarbon group-containing monofunctional (meth)acrylate or/and a polyfunctional (meth)acrylate. The radical polymerization initiator may be a thioxanthone compound.

PTL 3 discloses a multi-chromatic inkjet ink set which reduces the adverse effects of under- and over-pinning. In this multi-chromatic inkjet ink set, each ink comprises a radiation-curable monomer or/and oligomer, a photoinitiator package, a dispersed pigment and optionally a solvent, wherein the pigments have different radiation absorptions at a given wavelength. Preferably, the multi-chromatic inkjet ink set is a CMYK set, wherein the photoinitiator packages absorb at the given wavelength in the order K > Y > C > M, the photoinitiator package of the black ink and the yellow ink contains an acyl phosphine oxide photoinitiator and optionally a thioxanthone sensitizer, and the photoinitiator package of the cyan ink and the magenta ink contains an α-hydroxy ketone photoinitiator.

PTL 4 discloses an inkjet recording method which enables to record a high quality image having small deterioration with reduced density unevenness and ink bleeding with each color when applied in multicolor printing with a single pass mode recording at high speed. The method comprises the steps of jetting a first ink on a recording medium from a plurality of full line type inkjet heads each jetting an active energy ray curable ink having a different color with each other; irradiating the first ink landed on the recording medium with an active energy ray to semi-cure the first ink; and jetting a second ink to land on the semi-cured first ink to form an image. In the method, the relational expression 0.6 ≤ R/R0 ≤ 0.9 is satisfied, wherein R means a dot radius of the second ink jetted on the first ink which is jetted on the recording medium and semi-cured, and R0 means a dot radius of the second ink directly jetted on the recording medium.

PTL 5 discloses an inkjet ink set which is capable of forming a printed image having both high image quality and surface glossiness. The inkjet ink set comprises (a) a color ink that undergoes temperature-induced sol-gel phase transition, and that comprises a photocurable compound, a photopolymerization initiator, a gelling agent and a colorant, and (b) a clear ink that undergoes temperature-induced sol-gel phase transition, and that comprises a photocurable compound, a photopolymerization initiator and a gelling agent. In the inkjet ink set, the viscosity η (CL) of the clear ink at 25°C is less than 1/2 of the viscosity η (CO) of the color ink at 25°C, and the viscosity η (CL) of the clear ink is 1 × 10³ mPa·s or more. Further disclosed is an image forming method making use of the inkjet ink set.

PTL 6 discloses an inkjet recording ink set which is capable of forming a high image quality image having a long term storage stability and being curable even with a low exposure energy. The inkjet recording ink set comprises a plurality of kinds of liquids including at least a first liquid and a second liquid having compositions different from each other, wherein the first liquid includes at least one kind of cleavage type polymerization initiators, the second liquid includes a hydrogen abstraction type polymerization initiator and at least one kind of sensitizer, and at least one among a plurality of kinds of the liquids includes a polymerizable compound. Further disclosed is an inkjet image recording method, wherein the first liquid and the second liquid are simultaneously given on a medium to be recorded, or either one of the liquids is given first and then the remaining one is given so as to bring both the liquids into contact with each other.

PTL 7 discloses an inkjet recording method which is capable of forming an image having high chroma and excellent surface gloss using an ink set including inks containing specified pigments of cyan, magenta, yellow, and black. The method comprises discharging an ink; irradiating the discharged ink with actinic radiation by exposure means having an illumination intensity of at least 50 mW/cm but less than 500 mW/cm in a time period between 0 and 1.0 sec after ink discharge so that the integrated exposure for a wavelength region of 240 to 400 nm is not greater than 40 mJ/cm; and irradiating the discharged ink with actinic radiation by exposure means having an illumination intensity of at least 500 mW/cm after at least 1.0 sec has passed after ink discharge so that the integrated exposure for a wavelength region of 240 to 400 nm is 20 to 250 mJ/cm.

PTL 8 discloses an ink set having excellent curing properties under LED light, providing printed matter that does not fade or discolor due to a photopolymerization initiator, suppressing color bleeding during image forming, exhibiting favorable adhesion towards a polyvinyl chloride sheet, enabling cock ring to be efficiently suppressed, and demonstrating an extremely low viscosity, high flash point and low skin irritation. The ink set contains at least two photocurable inks selected from the group consisting of a yellow ink, a magenta ink, a cyan ink, a black ink, a white ink and a clear ink, wherein the photocurable inks each have a flash point of 70°C or higher and a viscosity at 25°C of 5 mPa·s or less. The yellow ink, the magenta ink, the cyan ink, the black ink and the white ink each contain at least a pigment, photopolymerizable compounds and a photopolymerization initiator, whereas the clear ink contains at least photopolymerizable compounds and a photopolymerization initiator.

PTL 9 discloses an ink set which is capable of forming an image excellent in curability, rubbing resistance and light resistance, which inhibits color mixing on image forming, and which gives an image hard to cause film-peeling by bending. The ink set is constituted of a cyan ink, a magenta ink, a yellow ink and a black ink, wherein each of the inks comprises at least a coloring material, a polymerizable compound and a photopolymerization initiator. The yellow ink and the black ink contain, based on their entire amounts, 1 to 4 mass% of thioxanthone-based photopolymerization initiator having a plurality of functional groups as the photopolymerization initiator, whereas the cyan ink and the magenta ink are substantially devoid of a thioxanthone-based photopolymerization initiator.

### Citation List

### Patent Literature

PTL 1: Japanese Patent Application Publication No. JP 2014-091830 A
PTL 2: European Patent Application Publication No. EP 2 568 020 A1 (corresponding to Japanese Patent Application Publication No. JP 2013-057042 A)
PTL 3: British Patent Application Publication No. GB 2 520 595 A
PTL 4: European Patent Application Publication No. EP 2 292 430 A1
PTL 5: International Patent Application Publication No. WO 2013/157271 A1
PTL6: Japanese Patent Application Publication No. JP 2007-237405 A
PTL 7: Japanese Patent Application Publication No. JP 2012-067179 A
PTL 8: International Patent Application Publication No. WO 2014/065362 A1
PTL 9: Japanese Patent Application Publication No. JP 2010-138315 A

### Summary of Invention

### Technical Problem

In a conventional ink set, however, it is difficult to cause inks of respective colors to have equivalent curability, and hence, if the inks of the respective colors are photocured under the same conditions, the resultant cured state is disadvantageously varied among the inks of the respective colors. If the amount of radiation is set in accordance with, for example, an ink easily cured, some of the other inks are not sufficiently cured, and hence, a resultant image (a cured film) may be partly sticky, or may easily have ununiform glossiness. Besides, if an inside portion of the image (the cured film) was insufficiently cured, a part of the image was sometimes peeled off from a recording medium. On the other hand, if the amount of radiation was set in accordance with an ink difficult to cure, gel crystal present on a surface of the cured film was melted by radiant heat or the like, and hence, glossiness of the resultant image was sometimes found insufficient.

The present invention was devised in consideration of the above-described problems, and an object is to provide an ink set in which all inks have good curability and can be homogeneously cured under the same curing conditions, and an image forming method using the same. The invention is defined by the claims.

### Solution to Problem

In a first aspect, the invention thus relates to an ink set as defined in claim 1. The ink set includes at least an ink A and an ink B, wherein each of the ink A and the ink B contains a photocurable compound, a photopolymerization initiator, a gelling agent and a colorant, and is cured through irradiation with actinic radiation. In the ink A, the colorant has a phthalocyanine structure or a quinacridone structure, and the photopolymerization initiator is a composition containing a hydrogen abstraction photopolymerization initiator. In the ink B, the colorant has neither a phthalocyanine structure nor a quinacridone structure, and the photopolymerization initiator is a composition containing the hydrogen abstraction photopolymerization initiator in an amount less than 0.1mass% with respect to a total mass of the ink B.

In a second aspect, the invention relates to an image forming method as defined in claim 7. The image forming method includes:
discharging the ink A and the ink B included in the ink set of the first aspect from inkjet nozzles and causing the inks to land on a recording medium; and
curing the ink A and the ink B by irradiating, with actinic radiation, the ink A and the ink B landed on the recording medium.

### Advantageous Effects of Invention

In an ink set of the present invention, all inks have good curability and can be homogeneously cured using the same light source with the same amount of actinic radiation. Accordingly, when the ink set is used, an image that has uniform glossiness and has neither a sticky portion nor a peeled portion can be formed.

### Description of Embodiments

### [Ink Set]

An ink set of the present invention is a set of inks to be applied using an inkjet apparatus and cured through irradiation with actinic radiation. The ink set includes at least two inks (of two colors). Specifically, the ink set includes at least ink A containing a colorant having a phthalocyanine structure or a quinacridone structure, and ink B containing a colorant having neither a phthalocyanine structure nor a quinacridone structure. It is noted that the ink set may include a plurality of inks A and a plurality of inks B, respectively. Here, each of the color inks (the inks A and B) contains, in addition to the colorant, a photocurable compound, a photopolymerization initiator, and a gelling agent.

As described above, in a conventional ink set, curability is easily varied among inks of respective colors, and it is difficult to homogeneously cure all ink droplets under the same curing conditions. In addition, in an image (a cured film) formed using the ink set, if any of the inks is insufficiently cured, glossiness is easily varied, or a part of the image becomes easily sticky. Besides, if an inside portion of the image is insufficiently cured, adhesiveness between the image and a recording medium is insufficient, and hence, the image is easily peeled off from the recording medium. On the other hand, if the ink is excessively irradiated with actinic radiation, gel crystal present on a surface of the cured film is melted by radiant heat or the like, and hence, glossiness on the surface is easily degraded.

The present inventors made earnest studies on the problems, resulting in finding that curing inhibition owing to oxygen is more easily caused and surface curability of a coating film is more easily lowered in using an ink containing a colorant having a phthalocyanine structure or a quinacridone structure than in using an ink containing a colorant having another structure. The curing inhibition owing to oxygen is presumed to be caused in the phthalocyanine structure and the quinacridone structure for the following reason: If an ink contains a colorant having the phthalocyanine structure or the quinacridone structure, an interaction is easily caused between the colorant and a gelling agent when the gelling agent is precipitated, and crystal generated through the precipitation of the gelling agent becomes small. As a result, oxygen easily permeates through a surface of a coating film, and the inhibition owing to oxygen is easily caused.

On the other hand, in using an ink containing a colorant having neither the phthalocyanine structure nor the quinacridone structure, it has been found that although the curing inhibition owing to oxygen is difficult to be caused, internal curability easily becomes insufficient if the ink contains a large amount of a hydrogen abstraction photopolymerization initiator. In the hydrogen abstraction photopolymerization initiator, the skeleton is not changed even after generating a radical but a structure easily absorbing actinic radiation is retained. Therefore, if an ink contains a large amount of the hydrogen abstraction photopolymerization initiator, irradiated actinic radiation is absorbed by the hydrogen abstraction photopolymerization initiator, and hence is difficult to sufficiently reach an inside portion of a coating film. As a result, the photopolymerization initiator present in an inside portion of an ink droplet is not sufficiently activated, and this is presumably the reason why the internal curability of a resultant coating film easily becomes insufficient. In addition, particularly in inks of yellow, black and white, colorants used therein have absorption wavelength ranges in a region similar to an absorption wavelength range of the photopolymerization initiator. Therefore, in particularly such inks, curing sufficiently through the inside portion with a small amount of actinic radiation is presumed difficult.

The present invention was devised in consideration of these findings. Ink A, included in the ink set of the present invention, containing the colorant having the phthalocyanine structure or the quinacridone structure contains a hydrogen abstraction photopolymerization initiator. On the other hand, ink B containing the colorant having neither the phthalocyanine structure nor the quinacridone structure does not contain a hydrogen abstraction photopolymerization initiator, or even if contained, the hydrogen abstraction photopolymerization initiator is contained in an amount less than 0.1mass% with respect to a total mass of ink B.

In other words, in ink A containing the colorant having the phthalocyanine structure or the quinacridone structure, the curing inhibition owing to oxygen is suppressed by the hydrogen abstraction photopolymerization initiator, and hence, the surface of a coating film of ink A is sufficiently cured. On the other hand, in an ink B containing the colorant having neither the phthalocyanine structure nor the quinacridone structure, the actinic radiation easily reaches an inside portion of a coating film of ink B because the amount of the hydrogen abstraction photopolymerization initiator contained therein is extremely small. As a result, the photopolymerization initiator present in the inside portion of the coating film is sufficiently activated, and the coating film is sufficiently cured to the inside portion.

Specifically, in the ink set of the present invention, both ink A and ink B have good curability, and hence can be sufficiently cured under the same curing conditions. In addition, in an image formed using the ink set, glossiness in an entire image easily become uniform, and adhesiveness between the image and a recording medium is high. Besides, the ink set of the present invention has an advantage that the inks of respective colors can be sufficiently cured with a comparatively small amount of actinic radiation.

Here, examples of the actinic radiation used for curing the respective inks included in the ink set of the present invention include ultraviolet rays, electron beams, α-rays, γ-rays and X-rays. The actinic radiation is preferably ultraviolet rays, and more preferably light having a peak wavelength at 365 nm or more and 405 nm or less from the viewpoint of an absorption wavelength of the photopolymerization initiator described later, safety, and the like.

Specific compositions of ink A and ink B included in the ink set of the present invention will now be described.

### 1. Ink A

Ink A contains the colorant having the phthalocyanine structure or the quinacridone structure, the photopolymerization initiator, the photocurable compound, and the gelling agent. Ink A may contain an amine-based compound, and may further contain another component. The respective components contained in ink A will now be described.

### 1-1. Colorant

As described above, ink A contains the colorant having the phthalocyanine structure or the quinacridone structure. The colorant having the phthalocyanine structure or the quinacridone structure may be a pigment or a dye, and a pigment is preferably used from the viewpoint that a pigment has good dispersibility in the other components of ink A and is excellent in weather resistance. Besides, ink A may contain merely one of, or two or more of such colorants. The colorant having the phthalocyanine structure is usually used in a blue or green ink. On the other hand, the colorant having the quinacridone structure is usually used in a magenta ink. In other words, ink A may be a cyan ion, a magenta ink or a green ink, but the color of ink A is not limited to these colors.

Incidentally, ink A may partly contain a colorant having neither the phthalocyanine structure nor the quinacridone structure. In the present invention, it is noted, however, that an ink containing colorant(s) having the phthalocyanine structure or the quinacridone structure in a total mass of 70mass% or more with respect to the total mass of colorant(s) contained in one ink (of a specific color) is defined as ink A, and that an ink containing the colorant(s) having the phthalocyanine structure or the quinacridone structure in a total mass less than 30mass% is defined as ink B.

Here, examples of the colorant having the phthalocyanine structure contained in ink A include blue pigments such as C.I. pigment blue 15, 15:1, 15:2, 15:3, 15:4, 15:5,15:6, 16, 17, 17:1, 75, 76 and 79; and green pigments such as C.I. pigment green 7, 36, 42, and 58.

On the other hand, examples of the colorant having the quinacridone structure include orange pigments such as C.I. pigment orange 48 and 49; red pigments such as C.I. pigment red 122, 202, 206, 207 and 209; and violet pigments such as C.I. pigment violet 19 and 42.

Other examples of the colorant having the quinacridone structure include mixed crystal pigments of C.I. pigment red 122, 202, and/or 209, and C.I. pigment violet 19.

Here, ink A contains the colorant in an amount of preferably 0.5mass% or more and 15mass% or less, more preferably 1mass% or more and 12mass% or less, and further preferably 2mass% or more and 10mass% or less with respect to the total mass of ink A. If the amount of the colorant is 0.5mass% or more, ink A is easily sufficiently colored. On the other hand, if the amount of the colorant is 15mass% or less, the viscosity of ink A is not excessively increased, and ink A can be easily stably discharged from an inkjet apparatus.

### 1-2. Photopolymerization Initiator

Ink A contains, as the photopolymerization initiator, at least the hydrogen abstraction photopolymerization initiator, and preferably further contains an α-cleavage type photopolymerization initiator. The surface curability of ink A can be increased by the hydrogen abstraction photopolymerization initiator as described above, and the curability of ink A can be further increased when the α-cleavage type photopolymerization initiator is used in combination.

Examples of the hydrogen abstraction photopolymerization initiator contained in ink A include a thioxanthone-based compound, a benzophenone-based compound, an anthraquinone-based compound, and an acridine-based compound. Specific examples of the thioxanthone-based compound include 2,4-dimethyl thioxanthone, 2,4-diethyl thioxanthone, isopropyl thioxanthone, chlorothioxanthone, 2,4-dichlorothioxanthone, and isopropoxychlorothioxanthone.

Specific examples of the benzophenone-based compound include benzophenone, methyl-4-phenylbenzophenone o-benzoylbenzoate, 4,4'-dichlorobenzophenone, hydroxybenzophenone, 4-benzoyl-4'-methyl-diphenylsulfide, acrylated benzophenone, 3,3',4,4'-tetra(t-butylperoxycarbonyl)benzophenone, 3,3 '-dimethyl-4-methoxybenzophenone, and N,N-diethylbenzophenone.

Specific examples of the anthraquinone-based compound include ethyl anthraquinone, benzanthraquinone, aminoanthraquinone, and chloroanthraquinone. Specific examples of the acridine-based compound include 9-phenylacridine, and 1,7-bis(9,9-acridinyl)heptane.

The hydrogen abstraction photopolymerization initiator is particularly preferably a thioxanthone-based compound. A thioxanthone-based compound has an absorption wavelength also on a comparatively long wavelength side. Accordingly, when ink A contains a thioxanthone-based compound as the photopolymerization initiator, ink A can be cured also using an LED light source.

An amount of the hydrogen abstraction photopolymerization initiator contained in ink A is preferably 0.1mass% or more and 6mass% or less, more preferably 0.5mass% or more and 5mass% or less, and further preferably 1mass% or more and 4mass% or less with respect to the total mass of ink A. When the amount of the hydrogen abstraction photopolymerization initiator is 0.1mass% or more, the curing inhibition owing to oxygen is difficult to be caused in curing ink A, and the surface curability of a resultant cured film becomes good. On the other hand, if the amount of the hydrogen abstraction photopolymerization initiator is excessive, the hydrogen abstraction photopolymerization initiator absorbs the actinic radiation in curing ink A, and hence a coating film may be difficult to be sufficiently cured to the inside portion. If the amount is 6mass% or less, however, a coating film of ink A can be sufficiently cured to the inside portion.

Examples of the α-cleavage type photopolymerization initiator include an acetophenone-based compound, a benzoin-based compound, and an acylphosphine oxide-based compound. Specific examples of the acetophenone-based compound include diethoxyacetophenone, 2-hydroxy-1-{4-[4-(2-hydroxy-2-methyl-propionyl)-benzyl]phenyl}-2-methyl-propan-1-on, 1-[4-(2-hydroxyethoxy)-phenyl]-2-hydroxy-2-methyl-1-propan-1-on, 2,2-dimethoxy-1,2-diphenylethan-1-on, 2-hydroxy-2-methyl-1-phenylpropan-1-on, benzyl dimethyl ketal, 1-(4-isopropylphenyl)-2-hydroxy-2-methylpropan-1-on, 4-(2-hydroxyethoxy)phenyl-(2-hydroxy-2-propyl)ketone, 1-hydroxycyclohexyl-phenyl ketone, 2-methyl-2-morpholino(4-thiomethylphenyl)propan-1-on, and 2-benzyl-2-dimethylamino-1-(4-morpholinophenyl)-butanone.

Specific examples of the benzoin-based compound include benzoin, benzoin methyl ether, and benzoin isopropyl ether.

Specific examples of the acylphosphine oxide-based compound include bis(2,4,6-trimethylbenzoyl)phenylphosphine oxide, bis(2,6-dimethylbenzoyl)phenylphosphine oxide, bis(2,4,6-trimethylbenzoyl)-2-methoxyphenylphosphine oxide, bis(2,6-dimethylbenzoyl)-2-methoxyphenylphosphine oxide, bis(2,4,6-trimethylbenzoyl)-2,4-dimethoxyphenylphosphine oxide, bis(2,6-dimethylbenzoyl)-2,4-dimethoxyphenylphosphine oxide, bis(2,4,6-trimethylbenzoyl)-2,4-dipentyloxyphenylphosphine oxide, and bis(2,6-dimethylbenzoyl)-2,4-dipentyloxyphenylphosphine oxide. Among these, bis(2,4,6-trimethylbenzoyl)phenylphosphine oxide is preferred.

Besides, an amount of the α-cleavage type photopolymerization initiator contained in ink A is preferably 0.5mass% or more and 10mass% or less, more preferably 1 or more and 8mass% or less, and further preferably 2mass% or more and 5mass% or less with respect to the total mass of ink A. When the amount of the α-cleavage type photopolymerization initiator falls in the above-described range, the curability of ink A can be easily sufficiently increased.

Here, the molecular weight of the photopolymerization initiator contained in ink A is preferably 400 or more. Incidentally, if the hydrogen abstraction photopolymerization initiator and the α-cleavage type photopolymerization initiator are used in combination, the molecular weight of merely the hydrogen abstraction photopolymerization initiator may be 400 or more, or the molecular weight of merely the α-cleavage type photopolymerization initiator may be 400 or more. It is more preferable that the molecular weights of both of these are 400 or more.

The molecular weight of each photopolymerization initiator is more preferably 400 or more and 3,000 or less, and further preferably 400 or more and 2,000 or less. When the molecular weight of the photopolymerization initiator contained in ink A is 400 or more, the photopolymerization initiator is difficult to migrate onto the surface of the resultant cured film, and the glossiness of the cured film is easily retained. It is noted that the term "molecular weight" refers to a sum of atomic weights of elements constituting a molecule. As a molecular weight of a molecule constituted by two or more repeating units, however, the term refers to a weight average molecular weight (in terms of polystyrene). As a method for measuring a molecular weight, any of known mass spectrometry can be employed. Besides, a weight average molecular weight (in terms of polystyrene) can be measured, for example, by a gel permeation chromatography (GPC) under the following conditions.

### Measurement Conditions for Gel Permeation Chromatography (GPC)

Solvent: tetrahydrofuran
Column: TSKgel G4000 + 2500 + 2000 HXL, manufactured by Tosoh Corporation
Column temperature: 40°C
Injection amount: 10 µl
Detector: L2455 (manufactured by Hitachi, Ltd.)
Pump: L6000 (manufactured by Hitachi, Ltd.)
Flow rate: 1.0 ml/min
Calibration curve: A calibration curve obtained by using 13 samples having a weight average molecular weight, in terms of standard polystyrene of standard polystyrene STK (manufactured by Tosoh Corporation), of 1,000,000 to 500 is used. The 13 samples used are at substantially equal intervals.

### 1-3. Photocurable Compound

The photocurable compound contained in ink A is not especially limited as long as it is a radical polymerizable compound crosslinked or polymerized through the irradiation with the actinic radiation. The photocurable compound may be any one of a monomer, a polymerizable oligomer, a prepolymer, and a mixture of any of these. Ink A may contain merely one photocurable compound, or two or more photocurable compounds.

The photocurable compound is preferably an unsaturated carboxylic acid ester compound, and is more preferably a (meth)acrylate or an oligomer thereof. It is noted that the term "(meth)acrylate" used herein means acrylate or methacrylate.

Examples of the (meth)acrylate that can be the photocurable compound include: monofunctional acrylates such as isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethyl hexyl-diglycol (meth)acrylate, 2-hydroxybutyl (meth)acrylate, 2-(meth)acryloyloxyethyl hexahydrophthalic acid, butoxyethyl (meth)acrylate, ethoxy diethylene glycol (meth)acrylate, methoxy diethylene glycol (meth)acrylate, methoxy polyethylene glycol (meth)acrylate, methoxy propylene glycol (meth)acrylate, phenoxy ethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethyl succinate, 2-(meth)acryloyloxyethyl phthalate, 2-(meth)acryloyloxyethyl-2-hydroxyethyl-phthalate, and t-butylcyclohexyl (meth)acrylate; difunctional (meth)acrylates such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A polyethylene oxide adduct di(meth)acrylate, neopentyl glycol hydroxypivalate di(meth)acrylate, polytetramethylene glycol di(meth)acrylate, polyethylene glycol diacrylate, and tripropylene glycol diacrylate; and tri- or higher functional (meth)acrylates such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate.

Besides, the oligomer of any of these may be obtained by polymerizing merely one of the above-described (meth)acrylates, or polymerizing two or more of these. An example of the oligomer includes CN2303 (manufactured by Sartomer).

Furthermore, examples of the photocurable compound include compounds obtained by modifying any of the above-described (meth)acrylates with ethylene oxide or propylene oxide (hereinafter, sometimes simply referred to as "modified (meth)acrylate"), and ink A preferably contains such a modified (meth)acrylate. The modified (meth)acrylate has very high photosensitivity. Besides, if the gelling agent has formed a crystal structure when the ink undergoes gelation, the modified (meth)acrylate is easily embraced in the crystal structure, and hence, a droplet of ink A is easily pinned on a recording medium. On the other hand, the modified (meth)acrylate is easily compatibilized with the other components contained in ink A even at a high temperature, and hence phase separation is difficult to be caused in ink A. Besides, since the modified (meth)acrylate shrinks a little through curing, a printed matter is minimally curled when ink A is cured.

Examples of a commercially available product of the modified (meth)acrylate include CD561, SR454, SR499 and SR494 (all manufactured by Sartomer); NK ester A-400, NK ester A-600, NK ester 9G, NK ester 14G, NK ester DOD-N, NK ester A-DCP, and NK ester DCP (all manufactured by Shin-Nakamura Chemical Co., Ltd.); and Photomer 6072 (manufactured by BASF Corporation).

Here, an amount of the photocurable compound contained in ink A can be 1mass% or more and 97mass% or less with respect to the total mass of ink A.

### 1-4. Gelling Agent

If ink A contains the gelling agent, an ink droplet having landed on a recording medium can be temporarily fixed (pinned) in a gel state. When the ink is pinned in a gel state, wet-spreading of the ink is suppressed to prevent adjacent dots from combining each other, and therefore, a higher resolution image can be formed. Besides, when the ink is in a gel state, entrance of environmental oxygen into an ink droplet is suppressed to prevent curing inhibition otherwise caused by the oxygen, and therefore, a high resolution image can be formed at a higher speed. Ink A may contain merely one gelling agent, or two or more gelling agents.

Besides, from the following viewpoint, the gelling agent is preferably a compound crystallized at a temperature equal to or lower than a gelling temperature of ink A. The gelling temperature of ink A refers to a temperature at which, in cooling ink A having been solated or liquefied by heating, the gelling agent undergoes a phase transition from a sol to a gel and the viscosity of ink A abruptly changes. Specifically, ink A having been solated or liquefied is cooled with its viscosity measured with a viscoelasticity measuring device (such as MCR300, manufactured by Physica), and a temperature at which the viscosity abruptly increases can be defined as the gelling temperature of ink A.

When the gelling agent is crystallized in ink A, a structure in which the photocurable compound is embraced in a three-dimensional space formed by the gelling agent crystallized in a plate shape (which structure is hereinafter referred to as the "card house structure") is formed in some cases. When the card house structure is formed, the photocurable compound in a liquid form is held within the space, the wet-spreading of the ink droplet is more difficult to occur, and hence the pinning property of ink A is further increased. When the pinning property of ink A is increased, ink droplets having landed on a recording medium are difficult to combine each other, and hence, a higher resolution image can be formed.

In order to hold the photocurable compound in the card house structure, the photocurable compound and the gelling agent are preferably compatibilized with each other in ink A. If the photocurable compound and the gelling agent are separated in phase in ink A, the photocurable compound is difficult to be held in the card house structure in some cases.

Examples of the gelling agent suitably used for forming the card house structure through the crystallization include a ketone wax, an ester wax, a petroleum wax, a vegetable wax, an animal wax, a mineral wax, a hydrogenated castor oil, a modified wax, a higher fatty acid, a higher alcohol, hydroxystearic acid, fatty acid amides including N-substituted fatty acid amide and special fatty acid amide, a higher amine, a sucrose fatty acid ester, a synthetic wax, dibenzylidene sorbitol, dimer acid, and dimer diol.

Examples of the ketone wax include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone.

Examples of the ester wax include behenyl behenate, icosyl icosanoate, behenyl stearate, stearyl stearate, palmityl stearate, cetyl palmitate, myristyl myristate, cetyl myristate, myristyl cerotate, oleyl palmitate, glycerin fatty acid ester, sorbitan fatty acid ester, propylene glycol fatty acid ester, ethylene glycol fatty acid ester, and polyoxyethylene fatty acid ester. Examples of a commercially available product of the ester wax include EMALEX series, manufactured by Nihon Emulsion Co., Ltd. ("EMALEX" being their registered trademark), and RIKEMAL series and POEM series, manufactured by Riken Vitamin Co., Ltd. (both "RIKEMAL" and "POEM" being their registered trademarks).

Examples of the petroleum wax include a paraffin wax, a microcrystalline wax, and a petrolactam.

Examples of the vegetable wax include a candelilla wax, a carnauba wax, a rice wax, a Japan wax, a jojoba oil, a jojoba solid wax, and a jojoba ester.

Examples of the animal wax include a beeswax, a lanolin, and a spermaceti.

Examples of the mineral wax include montan wax and hydrogenated wax.

Examples of the modified wax include a montan wax derivative, a paraffin wax derivative, a microcrystalline wax derivative, a 12-hydroxystearate derivative, and a polyethylene wax derivative.

Examples of the higher fatty acid include behenic acid, arachidic acid, stearic acid, palmitic acid, myristic acid, lauric acid, oleic acid, and erucic acid.

Examples of the higher alcohol include stearyl alcohol and behenyl alcohol.

An example of the hydroxystearic acid includes 12-hydroxystearic acid.

Examples of the fatty acid amides include lauric acid amide, stearic acid amide, behenic acid amide, oleic acid amide, erucic acid amide, ricinoleic acid amide, and 12-hydroxystearic acid amide.

Examples of a commercially available product of the fatty acid amide include NIKKAMIDE series, manufactured by Nippon Kasei Chemical Co., Ltd. ("NIKKAMIDE" being their registered trademark), ITOWAX series, manufactured by Ito Oil Chemicals Co., Ltd., and FATTY AMID series, manufactured by Kao Corporation.

Examples of the N-substituted fatty acid amide include N-stearyl stearic acid amide, and N-oleyl palmitic acid amide.

Examples of the special fatty acid amide include N,N'-ethylenebis stearyl amide, N,N'-ethylenebis-12-hydroxy stearyl amide, and N,N'-xylylenebis stearyl amide.

Examples of the higher amine include dodecylamine, tetradecylamine, and octadecylamine.

Examples of the sucrose fatty acid ester include sucrose stearate and sucrose palmitate. Examples of a commercially available product of the sucrose fatty acid ester include RYOTO sugar ester series, manufactured by Mitsubishi-Chemical Foods Corporation ("RYOTO" being their registered trademark).

Examples of the synthetic wax include a polyethylene wax, and an α-olefin maleic anhydride copolymer wax. Examples of a commercially available product of the synthetic wax include UNILIN series, manufactured by Baker-Petrolite ("UNILIN" being their registered trademark).

An example of the dibenzylidene sorbitol includes 1,3:2,4-bis-O-benzylidene-D-glucitol. An example of a commercially available product of the dibenzylidene sorbitol includes GEL ALL D, manufactured by New Japan Chemical Co., Ltd. ("GEL ALL" being their registered trademark).

Examples of a commercially available product of the dimer diol include PRIPOR series, manufactured by CRODA ("PRIPOR" being their registered trademark).

From the viewpoint of improving the pinning property of ink A, the gelling agent is preferably a ketone wax, an ester wax, a higher fatty acid, a higher alcohol or a fatty acid amide, and is more preferably a ketone wax represented by the following general formula (G1) or an ester wax represented by the following general formula (G2). Ink A may contain merely one of, or two or more of ketone waxes represented by general formula (G1) and ester waxes represented by general formula (G2). Besides, ink A may contain either one of or both of a ketone wax represented by general formula (G1) and an ester wax represented by general formula (G2).

General formula (G1): R1-CO-R2

In general formula (G1), each of R1 and R2 represents a straight chain or branched chain hydrocarbon group having 9 or more and 25 or less carbon atoms.

General formula (G2): R3-COO-R4

In general formula (G2), each of R3 and R4 represents a straight chain or branched chain hydrocarbon group having 9 or more and 25 or less carbon atoms.

In the ketone wax represented by general formula (G1) or the ester wax represented by general formula (G2), the carbon number of a straight chain or branched chain hydrocarbon group is 9 or more and therfore, crystallinity of the gelling agent is high. Besides, a more sufficient space is formed in the card house structure. Therefore, the photocurable compound is easily sufficiently embraced in the space, and the pinning property of ink A increases. Furthermore, since the carbon number of the straight chain or branched chain hydrocarbon group is 25 or less, the melting point of the gelling agent does not excessively increase, and hence, there is no need to excessively heat ink A in discharging ink A from an inkjet apparatus. From the above-described points of view, each of R1 and R2 is particularly preferably a straight chain hydrocarbon group having 11 or more and less than 23 carbon atoms.

From the viewpoint of rapidly gelling ink After the landing by increasing the gelling temperature of ink A, either one of R1 or R2, or either one of R3 or R4 is preferably a saturated hydrocarbon group having 11 or more and less than 23 carbon atoms. From the above-described point of view, more preferably, both R1 and R2, or both R3 and R4 are a saturated hydrocarbon group having 11 or more and less than 23 carbon atoms.

Examples of the ketone wax represented by general formula (G1) include dilignoceryl ketone (carbon numbers: 23 - 24), dibehenyl ketone (carbon numbers: 21 - 22), distearyl ketone (carbon numbers: 17 - 18), dieicosyl ketone (carbon numbers: 19 - 20), dipalmityl ketone (carbon numbers: 15 - 16), dimyristyl ketone (carbon numbers: 13 - 14), dilauryl ketone (carbon numbers: 11 - 12), lauryl myristyl ketone (carbon numbers: 11 - 14), lauryl palmityl ketone (carbon numbers: 11 - 16), myristyl palmityl ketone (carbon numbers: 13 - 16), myristyl stearyl ketone (carbon numbers: 13 - 18), myristyl behenyl ketone (carbon numbers: 13 - 22), palmityl stearyl ketone (carbon numbers: 15 - 18), palmityl behenyl ketone (carbon numbers: 15 - 22), and stearyl behenyl ketone (carbon numbers: 17 - 22). It is noted that the carbon numbers in parentheses correspond to carbon numbers (the number of carbon atoms) of two hydrocarbon groups divided by a carbonyl group.

Examples of a commercially available product of the ketone wax represented by general formula (G1) include 18-Pentatriacontanon, manufactured by Alfa Aesar, Hentriacontan-16-on, manufactured by Alfa Aesar, and Kao Wax T1, manufactured by Kao Corporation.

Examples of the fatty acid or the ester wax represented by general formula (G2) include behenyl behenate (carbon numbers: 21 - 22), icosyl icosanoate (carbon numbers: 19 - 20), stearyl stearate (carbon numbers: 17 - 18), palmityl stearate (carbon numbers: 17 - 16), lauryl stearate (carbon numbers: 17 - 12), cetyl palmitate (carbon numbers: 15 - 16), stearyl palmitate (carbon numbers: 15 - 18), myristyl myristate (carbon numbers: 13 - 14), cetyl myristate (carbon numbers: 13 - 16), octyldodecyl myristate (carbon numbers: 13 - 20), stearyl oleate (carbon numbers: 17 - 18), stearyl erucate (carbon numbers: 21 - 18), stearyl linoleate (carbon numbers: 17 - 18), behenyl oleate (carbon numbers: 18 - 22), and arachidyl linoleate (carbon numbers: 17 - 20). It is noted that the carbon numbers in parentheses correspond to carbon numbers of two hydrocarbon groups divided by an ester group.

Examples of a commercially available product of the ester wax represented by general formula (G2) include UNISTER M-2222SL, SPERMACETI, NISSAN ELECTOL WEP3, NISSAN ELECTOL WEP2, and NISSAN ELECTOL WE11, manufactured by NOF Corporation ("UNISTER" and "NISSAN ELECTOL" being their registered trademarks), Exepearl SS and Exepearl MY-M, manufactured by Kao Corporation ("Exepearl" being their registered trademark), EMALEX CC-18 and EMALEX CC-10, manufactured by Nihon Emulsion Co., Ltd. ("EMALEX" being their registered trademark), and AMREPS PC, manufactured by Kokyu Alcohol Kogyo Co., Ltd. ("AMREPS" being their registered trademark). Many of these commercially available products are mixtures of two or more components, and hence, they may be separated and refined if necessary before the addition to ink A.

A content of the gelling agent is preferably 1.0mass% or more and 10.0mass% or less with respect to the total mass of ink A. When the content of the gelling agent is 1.0mass% or more, the wet-spreading of droplets of ink A on a recording medium can be controlled to be equivalent in droplets. On the other hand, when the content of the gelling agent is less than 10mass%, the gelling agent is difficult to precipitate on the surface of an image (a cured film) to be formed, and hence a glossiness difference is difficult to be caused in the image. Besides, the strength of the cured film is increased to improve scratch resistance of the image. From the above-described points of view, the content of the gelling agent in ink A is more preferably 2.0mass% or more and less than 5.0mass%, and further preferably 2.0mass% or more and less than 4.0mass%.

### 1-5. Amine-based Compound

Ink A may further contain an amine-based compound if necessary. The amine-based compound is a compound contributing the polymerization of the photocurable compound as a polymerization initiator, and if ink A contains the amine-based compound, a crosslink density of the cured film obtained by curing ink A is easily increased. As a result, surface curability and uniformity of glossiness of the resultant image (cured film) are easily increased, and hence the cured film is difficult to peel off from a recording medium.

The amine-based compound can be, for example, an aromatic tertiary amine compound. Examples of the aromatic tertiary amine compound include N,N-dimethylaniline, N,N-diethylaniline, N,N-dimethyl-p-toluidine, ethyl N,N-dimethylamino-p-benzoate, isoamylethyl N,N-dimethylamino-p-benzoate, N,N-dihydroxyethyl aniline, triethylamine, N,N-dimethylhexylamine, and an amine-modified acrylate.

Here, the amine-based compound contained in ink A has a molecular weight of preferably 300 or more and 3,000 or less, more preferably 350 or more and 2,500 or less, and further preferably 400 or more and 2,000 or less. When the molecular weight of the amine-based compound falls in the above-described range, the crosslink density of the resultant cured film is easily sufficiently increased. Besides, if the molecular weight of the amine-based compound falls in the above-described range, the compound is difficult to bleed out on the surface of the cured film, and hence an image with high glossiness can be easily obtained. It is noted that the term "molecular weight" refers to a sum of atomic weights of elements constituting a molecule. As a molecular weight of a molecule constituted by two or more repeating units, however, the term refers to a weight average molecular weight (in terms of polystyrene). As a method for measuring a molecular weight, any of known mass spectrometry can be employed. Besides, a weight average molecular weight (in terms of polystyrene) can be measured by the gel permeation chromatography (GPC) in the same manner as described with respect to the photopolymerization initiator.

Besides, an amount of the amine-based compound contained in ink A is preferably 0.5mass% or more and 20mass% or less, more preferably 2mass% or more and 15mass% or less, and further preferably 4mass% or more and 10mass% or less with respect to the total mass of ink A. When the amount of the amine-based compound falls in the above-described range, the curability of ink A can be easily sufficiently increased.

### 1-6. Additional Components

Ink A may further contain a dispersant, a polymerization inhibitor, a surfactant, or another component as long as the curability and a coating property of ink A are not degraded. Ink A may contain merely one of, or two or more of such additional components.

Examples of the dispersant include a hydroxyl group-containing carboxylic acid ester, a salt of a long chain polyaminoamide and a high molecular weight acid ester, a salt of a high molecular weight polycarboxylic acid, a salt of a long chain polyaminoamide and a polar acid ester, a high molecular weight unsaturated acid ester, a polymeric copolymer, a modified polyurethane, a modified polyacrylate, a polyether ester anionic surfactant, a salt of naphthalenesulfonic acid formalin condensate, a salt of aromatic sulfonic acid formalin condensate, a polyoxyethylene alkyl phosphoric acid ester, a polyoxyethylene nonylphenyl ether, and stearylamine acetate.

The dispersant is contained preferably when the colorant is a pigment, and the amount is preferably 20mass% or more and 70mass% or less with respect to the content of the colorant (particularly, the pigment).

Examples of the polymerization inhibitor include (alkyl) phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutyl cresol, cyclohexanone oxime cresol, guaiacol, o-isopropylphenol, butyraldoxime, methyl ethyl ketoxime, and cyclohexanone oxime.

Examples of the surfactant include anionic surfactants such as a dialkyl sulfosuccinic acid salt, an alkyl naphthalene sulfonic acid salt, and a fatty acid salt; nonionic surfactants such as a polyoxyethylene alkyl ether, a polyoxyethylene alkyl allyl ether, an acetylene glycol, and a polyoxyethylene/polyoxypropylene block copolymer; cationic surfactants such as an alkyl amine salt and a quaternary ammonium salt; and silicone-based or fluorine-based surfactants.

Examples of a commercially available product of the silicone-based surfactant include KF-351A, KF-352A, KF-642 and X-22-4272, manufactured by Shin-Etsu Chemical Co., Ltd., BYK307, BYK345, BYK347 and BYK348, manufactured by BYK Japan KK ("BYK" being their registered trademark), and TSF4452, manufactured by Toshiba Silicones Co., Ltd.

A content of the surfactant is preferably 0.001mass% or more and less than 1.0mass% with respect to the total mass of ink A.

### 2. Ink B

Ink B included in the ink set of the present invention contains the colorant having neither the phthalocyanine structure nor the quinacridone structure, the photopolymerization initiator, the photocurable compound, and the gelling agent. Besides, ink B may contain the amine-based compound, if necessary, and may further contain other components. Here, the photocurable compound, the gelling agent, the amine-based compound and other components contained in ink B, and contents of these can be adjusted to fall in ranges similar to the respective compounds contained in ink A and the contents and the like thereof described above. Therefore, merely the colorant and the photopolymerization initiator contained in ink B will now be described.

### 2-1. Colorant

As described above, ink B contains the colorant having neither the phthalocyanine structure nor the quinacridone structure. The colorant having neither the phthalocyanine structure nor the quinacridone structure is not especially limited and can be appropriately selected in accordance with the color of ink B. The colorant can be a dye or a pigment, and a pigment is preferably used from the viewpoint that a pigment has good dispersibility in the other components of ink B and is excellent in weather resistance.

Ink B can be, for example, a yellow ink, a black ink, or a white ink. If ink B is a yellow ink, examples of the colorant contained in ink B include pigments such as C.I. pigment yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

If ink B is a black ink, examples of the colorant contained in ink B include pigments such as C.I. pigment black 7, 28 and 26.

If ink B is a white ink, examples of the colorant contained in ink B include pigments such as C.I. pigment white 6, 18, and 21. Alternatively, an organic compound salt described in Japanese Patent Application Laid-Open No. 11-129613, or an alkylene-bis-melamine derivative described in Japanese Patent Application Laid-Open No. 11-140365 or 2001-234093 can be used. Examples of a commercially available product of a colorant for a white ink include Shigenox OWP, Shigenox OWPL, Shigenox FWP, Shigenox FWG, Shigenox UL, and Shigenox U (all manufactured by Hakkol Chemical Co., Ltd.).

The color of ink B is, however, not limited to yellow, black and white, but can be any desired color. Accordingly, the colorant contained in ink B is not limited to those described above. Besides, as described above, ink B may partly contain the colorant having the phthalocyanine structure or the quinacridone structure, and a total mass of the colorant having the phthalocyanine structure or the quinacridone structure with respect to a total mass of colorants contained in ink B is preferably less than 30mass%, more preferably less than 10mass%, and further preferably, such a colorant is not substantially contained.

Here, ink B contains the colorant in an amount of preferably 0.5mass% or more and 15mass% or less, more preferably 1mass% or more and 12mass% or less, and further preferably 2mass% or more and 10mass% or less with respect to the total mass of ink B. If the amount of the colorant is 0.5mass% or more, ink B is easily sufficiently colored. On the other hand, if the amount of the colorant is 15mass% or less, the viscosity of ink B is not excessively increased, and ink B can be easily stably discharged from an inkjet apparatus.

### 2-2. Photopolymerization Initiator

Ink B contains the photopolymerization initiator. The type of the photopolymerization initiator contained in ink B is appropriately selected in accordance with the wavelength of the actinic radiation used for curing ink B or the like, and an α-cleavage type photopolymerization initiator is preferably used. If ink B contains the α-cleavage type photopolymerization initiator, the curability of ink B is easily increased, and the adhesiveness between a cured film of ink B and a recording medium is also easily increased. Here, the α-cleavage type photopolymerization initiator contained in ink B can be any of the α-cleavage type photopolymerization initiators described above as those contained in ink A, and is preferably bis(2,4,6-trimethylbenzoyl)-phenylphosphine oxide.

An amount of the α-cleavage type photopolymerization initiator contained in ink B is preferably 0.5mass% or more and 10mass% or less, more preferably 1mass% or more and 8mass% or less, and further preferably 2mass% or more and 5mass% or less with respect to the total mass of ink B. If the amount of the α-cleavage type photopolymerization initiator falls in the above-described range, the curability of ink B is easily sufficiently increased.

Besides, the α-cleavage type photopolymerization initiator contained in ink B has a molecular weight of preferably 400 or more. The molecular weight of the α-cleavage type photopolymerization initiator is more preferably 400 or more and 3,000 or less, and further preferably 400 or more and 2,000 or less. If the molecular weight of the α-cleavage type photopolymerization initiator contained in ink B is 400 or more, the photopolymerization initiator is difficult to migrate onto the surface of the resultant cured film, and the glossiness of the cured film is easily retained. It is noted that the term "molecular weight" refers to a sum of atomic weights of elements constituting a molecule. As a molecular weight of a molecule constituted by two or more repeating units, however, the term refers to a weight average molecular weight (in terms of polystyrene). As a method for measuring a molecular weight, any of known mass spectrometry can be employed. Besides, a weight average molecular weight (in terms of polystyrene) can be measured, for example, by the gel permeation chromatography (GPC) as described above.

On the other hand, a hydrogen abstraction photopolymerization initiator is contained in ink B in an amount less than 0.1mass% with respect to the total mass of ink B, and particularly preferably, is not contained. As described above, if ink B contains a large amount of the hydrogen abstraction photopolymerization initiator, the hydrogen abstraction photopolymerization initiator absorbs the actinic radiation, and a droplet of ink B may not be sufficiently irradiated with the actinic radiation to the inside portion. On the contrary, if the amount of the hydrogen abstraction photopolymerization initiator is less than 0.1mass% with respect to the total mass of ink B, a droplet of ink B can be sufficiently irradiated with the actinic radiation to the inside portion, and hence the curability of ink B is sufficiently increased.

### 3. Physical Properties of Ink A and Ink B

The viscosity, the gelling temperature and the like may be different between ink A and ink B, but from the viewpoint of discharging ink A and ink B through inkjet nozzles of one and the same inkjet apparatus, these physical properties are preferably equivalent therebetween.

The viscosity of each ink is appropriately selected in accordance with the type of the inkjet apparatus, and from the viewpoint of increasing a discharging property from an inkjet head, each ink has a viscosity, at 80°C, of preferably 3 mPa·s or more and 20 mPa· or less. Besides, from the viewpoint of sufficiently gelling each ink having landed and been cooled to normal temperature, the ink has a viscosity, at 25°C, of preferably 1,000 mPa·s or more.

The gelling temperature of each ink is preferably 40°C or more and 70°C or less. If the gelling temperature of each ink is 40°C or more, the ink rapidly undergoes gelation after landing on a recording medium, and hence, the pinning property is further increased. If the gelling temperature of each ink is 70°C or less, the ink is difficult to undergo gelation in discharging the ink from the inkjet heat where the temperature of the ink is usually about 80°C, and hence, the ink can be more stably discharged.

The viscosity at 80°C, the viscosity at 25°C and the gelling temperature of each of the inks can be obtained by measuring, with a rheometer, change, with temperature, of dynamic viscoelasticity of the ink. In the present invention, these viscosities and the gelling temperature are obtained by the following methods: Each of the inks is heated to 100°C, and while measuring its viscosity with a stress-controlled rheometer, Physica MCR301 (diameter of cone plate: 75 mm, cone angle: 1.0°), manufactured by Anton Paar, the ink is cooled to 20°C under conditions of a shear rate of 11.7 (1/s) and a cooling rate of 0.1°C/s, and thus, a viscosity-temperature curve is obtained. The viscosity at 80°C and the viscosity at 25°C are obtained reading viscosities at 80°C and 25°C on the viscosity-temperature curve. The gelling temperature is obtained as a temperature at which the viscosity is 200 mPa·s on the viscosity-temperature curve.

### 4. Preparation of Ink A and Ink B

Each of ink A and ink B described above can be obtained by, for example, mixing the colorant, the photopolymerization initiator, the photocurable compound, the gelling agent and other optional components while heating. The thus obtained mixed solution is preferably filtered through a prescribed filter. Alternatively, for example, if the colorant is a pigment, a pigment dispersion in which the pigment and a dispersant are dispersed in a solvent may be precedently prepared, so as to mix the other components with this dispersion while heating.

The pigment and the dispersant can be dispersed using, for example, a ball mill, a sand mill, an attritor, a roll mill, an agitator, a Henschel mixer, a colloid mill, an ultrasonic homogenizer, a pearl mill, a wet jet mill, or a paint shaker.

### [Image Forming Method]

An image forming method of the present invention includes a first step of discharging ink A and ink B comprised in the ink set ink A and ink B of the ink set described above from nozzles of an inkjet head and causing the inks to land on a recording medium; and a second step of curing the inks by irradiating, with actinic radiation, the inks landed on the recording medium. Ink A and ink B are discharged and cured preferably under the same conditions.

### 1. First Step

In the first step, droplets of ink A and ink B (hereinafter, collectively referred to simply as the "ink") are discharged from an inkjet head and so as to the droplets to land on a recording medium in positions in accordance with an image to be formed.

As a discharging method from the inkjet head, either of a drop-on-demand method or a continuous method may be employed. In employing the drop-on-demand method, the inkjet head may be any one of a single cavity type, a double cavity type, a vendor type, a piston type, an electrical/mechanical conversion system such as a share mode type or a shared wall type, and an electrical/thermal conversion system such as a thermal inkjet type or a bubble-jet type ("bubble-jet" being a registered trademark of Canon Inc.).

Discharging stability of the ink droplet can be increased by discharging the droplet in a heated state from the inkjet head. The temperature of the ink in discharging is preferably 35°C or more and 100°C or less, and for further increasing the discharging stability, is more preferably 35°C or more and 80°C or less. In particular, the droplet is preferably ejected at an ink temperature at which the viscosity of the ink is 7 mPa·s or more and 15 mPa·s or less, and more preferably 8 mPa·s or more and 13 mPa·s or less.

In order to increase the ink discharging property from the inkjet head, the temperature of the ink filled in the inkjet head is preferably set to [the gelling temperature + 10°C] and more and [the gelling temperature + 30°C] or less. If the temperature of the ink within the inkjet head is lower than [the gelling temperature + 10°C], the ink tends to undergo gelation within the inkjet head or on a surface of the nozzle to degrade the ink discharging property. On the other hand, if the temperature of the ink within the inkjet head exceeds [the gelling temperature + 30°C], the temperature of the ink is so high that the ink components may be degraded.

A method for heating the ink is not especially limited. For example, at least any one of an ink tank included in a head carriage, an ink supply system such as a supply pipe or an anterior chamber immediately before the head, a pipe with a filter, and a piezo head can be heated by using any one of a panel heater, a ribbon heater, heating water and the like.

The amount of the droplet of the ink to be discharged is preferably 2 pL or more and 20 pL or less from the viewpoint of a recording rate and an image quality.

The recording medium is not especially limited, and can be a non-absorbent recording medium made of a plastic (a plastic substrate) such as polyester, polyvinyl chloride, polyethylene, polyurethane, polypropylene, an acrylic resin, polycarbonate, polystyrene, an acrylonitrile-butadiene-styrene copolymer, polyethylene terephthalate, or polybutadiene terephthalate; a non-absorbent inorganic recording medium made of a metal, glass or the like; or absorbent paper (such as coated paper for printing, or coated paper B for printing).

### 2. Second Step

In the second step, the ink caused to land on the recording medium in the first step is irradiated with the actinic radiation to form an image by curing the ink.

The actinic radiation can be selected from, for example, electron beams, ultraviolet rays, α-rays, γ-rays, X-rays, and the like, and is preferably ultraviolet rays, and light having a peak wavelength of 365 nm or more and 405 nm or less is preferably irradiated from an LED light source. An example of the LED light source includes a water-cooled LED (having a peak wavelength of 395 nm) manufactured by Phoseon Technology, Inc. An LED emits a smaller amount of radiant heat than a conventional light source (such as a metal halide lamp). Therefore, when an LED light source is used, the ink is difficult to melt through the irradiation with the actinic radiation, and hence, ununiformity of glossiness and the like is difficult to be caused.

Here, if the light having a peak wavelength of 365 nm or more and 405 nm or less is irradiated, peak illuminance on the surface of the recording medium or the surface of the ink droplet is preferably 0.5 W/cm² or more and 10 W/cm² or less, and more preferably 1 W/cm² or more and 5 W/cm² or less. From the viewpoint of suppressing the radiant heat irradiation, the amount of the radiation used for irradiating the ink droplet is preferably less than 350 mJ/cm².

The actinic radiation is irradiated preferably within 0.001 seconds or more and 1.0 second or less after the ink lands on the recording medium, and for forming a high resolution image, more preferably within 0.001 seconds or more and 0.5 seconds or less.

On the other hand, the irradiation with the actinic radiation can be carried out in two steps. In this case, the actinic radiation is irradiated within 0.01 seconds or more and 2.0 seconds or less after the ink lands on the recording medium for temporarily curing the ink, and after completing the irradiation for the whole image, the actinic radiation is further irradiated so as to finally cure the ink. If the irradiation with the actinic radiation is thus carried out in the two steps, shrinkage of a recording material, which may otherwise occur in curing the ink, can be further suppressed.

### Examples

The present invention will now be described with reference to examples, and it is noted that the present invention is not limited to these examples.

### 1. Ink Materials

### [Colorant (Pigment)]

Cyan (C.I. pigment blue 15:4 (manufactured by Dainichiseika Color & Chemicals Mfg. Co., Ltd., Chromofine Blue 6332JC (phthalocyanine-based)))
Magenta (C.I. pigment violet 19 (manufactured by DIC Corporation, Super Red BRZ (quinacridone-based)))
Yellow (C.I. pigment yellow 180 (manufactured by Dainichiseika Color & Chemicals Mfg. Co., Ltd., Chromofine Yellow 6280JC (benzimidazolone-based)))
Black (C.I. pigment black 7 (manufactured by Mitsubishi Chemical Corporation, #52 (carbon black)))

### [Materials for Preparing Pigment Dispersion]

Ajisper PB824 (manufactured by Ajinomoto Fine-Techno Co., Ltd.)
APG-200 (manufactured by Shin-Nakamura Chemical Co., Ltd.)

### [Photocurable Compound]

NK ester A-400 (manufactured by Shin-Nakamura Chemical Co., Ltd.)
NK ester A-600 (manufactured by Shin-Nakamura Chemical Co., Ltd.)
SR499 (manufactured by Sartmer)
Photomer 4072 (manufactured by Cognis Corporation)
CN2303 (manufactured by Sartmer)

### [Gelling Agent]

Distearyl ketone (manufactured by Kao Corporation)
Behenyl stearate (manufactured by NOF Corporation)

### [Surfactant]

BYK307 (manufactured by BYK Japan KK)

### [Polymerization Inhibitor]

UV10 (manufactured by BASF Corporation)

### [α-Cleavage Type Photopolymerization Initiator]

IRGACURE 184 (manufactured by BASF Corporation, molecular weight: 207)
IRGACURE 819 (manufactured by BASF Corporation, molecular weight: 418)

### [Hydrogen Abstraction Photopolymerization Initiator]

- Thioxanthone-based
   SPEEDCURE ITX (manufactured by Lambson, molecular weight: 254)
   SPEEDCURE 7010-L (manufactured by Lambson, weight average molecular weight: 1839)
   GENOPOL TX-1 (manufactured by RAHN, weight average molecular weight: 824)
- Other
   KAYACURE BMS (manufactured by Nippon Kayaku Co., Ltd., molecular weight: 304)
   Omnipol BP (manufactured by RAHN, weight average molecular weight: 960)

### [Amine-based Compound]

SPEEDCURE EHA (manufactured by Lambson, molecular weight: 277)
CN371 (manufactured by Sartmer, weight average molecular weight: over 513 and 3,000 or less)

### 2. Preparation and Evaluation of Inks

### <Preparation of Pigment Dispersion>

A stainless steel beaker was charged with 9 parts by mass of Ajisper PB824 (manufactured by Ajinomoto Fine-Techno Co., Ltd.) and 71 parts by mass of APG-200 (manufactured by Shin-Nakamura Chemical Co., Ltd.), and the resultant was stirred for 1 hour with heating on a hot plate at 65°C to dissolve the contents. Thereafter, the thus obtained solution was cooled to room temperature, 20 parts by mass of a colorant (any of cyan, magenta, yellow or black) was added thereto. The resultant solution was put in a glass bottle together with 200 g of zirconia beads having a diameter of 0.5 mm, and the glass bottle was tightly sealed. Then, a dispersion treatment was carried out with a paint shaker for a prescribed period of time, followed by removing the zirconia beads. It is noted that a dispersion time was 5 hours for cyan and black, respectively, and was 8 hours for magenta and yellow, respectively.

### <Preparation of Inks 1 to 28>

The pigment dispersion, the photocurable compound, the gelling agent, the surfactant, the polymerization inhibitor, the photopolymerization initiator (the α-cleavage type photopolymerization initiator and the hydrogen abstraction photopolymerization initiator), and the amine-based compound were mixed in a corresponding mass ratio shown in Tables 1 and 2, the resultant was filtered through a WAC filter (precision of 0.3 µm, manufactured by Pall Corporation), and thus, each of inks 1 to 28 was prepared.

**[Table 1]**

| ink No. | | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|
| Pigment dispersion | | CYAN | 12.5 | | 12.5 | | 12.5 | | 12.5 | | 12.5 | | 12.5 | | 12.5 | |
| | | MAGENTA | | 21.0 | | 21.0 | | 21.0 | | 21.0 | | 21.0 | | 21.0 | | 21.0 |
| | | YELLOW | | | | | | | | | | | | | | |
| | | BLACK | | | | | | | | | | | | | | |
| Photocurable compound | | NK ESTER A-400 | 16.0 | 16.0 | 16.0 | 16.0 | 16.0 | 16.0 | 16.0 | 16.0 | 16.0 | 16.0 | 16.0 | 16.0 | 16.0 | 16.0 |
| | | NK ESTER A-600 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | SR499 | 25.5 | 17.0 | 24.0 | 15.5 | 23.0 | 14.5 | 23.0 | 14.5 | 21.0 | 12.5 | 18.0 | 9.5 | 23.0 | 14.5 |
| | | Photomer 4072 | 30.0 | 30.0 | 30.0 | 30.0 | 30.0 | 30.0 | 30.0 | 30.0 | 30.0 | 30.0 | 30.0 | 30.0 | 30.0 | 30.0 |
| | | CN2303 | 5.0 | 5.0 | 5.0 | 5.0 | 5.0 | 5.0 | 5.0 | 5.0 | 5.0 | 5.0 | 5.0 | 5.0 | 5.0 | 5.0 |
| Gelling agent | | DISTEARYL KETONE | 2.0 | 2.0 | 2.0 | 2.0 | 2.0 | 2.0 | 2.0 | 2.0 | 2.0 | 2.0 | 2.0 | 2.0 | 2.0 | 2.0 |
| | | BEHENYL STEARATE | 0.4 | 0.4 | 0.4 | 0.4 | 0.4 | 0.4 | 0.4 | 0.4 | 0.4 | 0.4 | 0.4 | 0.4 | 0.4 | 0.4 |
| Surfactant | | BYK307 | 0.05 | 0.05 | 0.05 | 0.05 | 0.05 | 0.05 | 0.05 | 0.05 | 0.05 | 0.05 | 0.05 | 0.05 | 0.05 | 0.05 |
| Polymerization inhibitor | | UV10 | 0.1 | 0.1 | 0.1 | 0.1 | 0.1 | 0.1 | 0.1 | 0.1 | 0.1 | 0.1 | 0.1 | 0.1 | 0.1 | 0.1 |
| Photopolymerization initiator | α cleavage type | IRGACURE 819 (Mw:418) | 4.0 | 4.0 | 4.0 | 4.0 | 4.0 | 4.0 | 4.0 | 4.0 | 4.0 | 4.0 | 4.0 | 4.0 | | |
| | | IRGACURE 184 (Mw:207) | | | | | | | | | | | | | 5.0 | 5.0 |
| | Hydrogen abstraction type | SPEEDCURE ITX (Mw:254) | 0.5 | 0.5 | 2.0 | 2.0 | | | | | | | | | | |
| | | KAYACURE BMS (Mw:304) | | | | | | | | | | | | | 2.0 | 2.0 |
| | | SPEEDCURE 7010-L (Mw:1839) | | | | | 3.0 | 3.0 | | | 3.0 | 3.0 | 3.0 | 3.0 | | |
| | | GENOPOL TX-1 (Mw:824) | | | | | | | 3.0 | 3.0 | | | | | | |
| | | Omnipol BP(Mw:960) | | | | | | | | | | | | | | |
| Amine-based compound | | SPEEDCURE EHA (Mw:277) | | | | | | | | | 2.0 | 2.0 | | | | |
| | | CN371(Mw:513<) | | | | | | | | | | | 5.0 | 5.0 | | |

**[Table 2]**

| Ink No. | | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|---|
| Pigment dispersion | | CYAN | 12.5 | | 12.5 | | | | | | | | 12.5 | | | |
| | | MAGENTA | | 21.0 | | 21.0 | | | | | | | | 21.0 | | |
| | | YELLOW | | | | | 14.0 | | 14.0 | | 14.0 | | | | 14.0 | |
| | | BLACK | | | | | | 12.0 | | 12.0 | | 12.0 | | | | 12.0 |
| Photocurable compound | | NK ESTER A-400 | 16.0 | 16.0 | 16.0 | 16.0 | 16.0 | 16.0 | 16.0 | 16.0 | 16.0 | 16.0 | 16.0 | 16.0 | 16.0 | 16.0 |
| | | NK ESTER A-600 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | SR499 | 22.0 | 13.5 | 17.0 | 8.5 | 24.5 | 26.5 | 19.5 | 21.5 | 18.5 | 20.5 | 26.0 | 17.5 | 22.5 | 24.5 |
| | | Photomer 4072 | 30.0 | 30.0 | 30.0 | 30.0 | 30.0 | 30.0 | 30.0 | 30.0 | 30.0 | 30.0 | 30.0 | 30.0 | 30.0 | 30.0 |
| | | CN2303 | 5.0 | 5.0 | 5.0 | 5.0 | 5.0 | 5.0 | 5.0 | 5.0 | 5.0 | 5.0 | 5.0 | 5.0 | 5.0 | 5.0 |
| Gelling agent | | DISTEARYL KETONE | 2.0 | 2.0 | 2.0 | 2.0 | 2.0 | 2.0 | 2.0 | 2.0 | 2.0 | 2.0 | 2.0 | 2.0 | 2.0 | 2.0 |
| | | BEHENYL STEARATE | 0.4 | 0.4 | 0.4 | 0.4 | 0.4 | 0.4 | 0.4 | 0.4 | 0.4 | 0.4 | 0.4 | 0.4 | 0.4 | 0.4 |
| Surfactant | | BYK307 | 0.05 | 0.05 | 0.05 | 0.05 | 0.05 | 0.05 | 0.05 | 0.05 | 0.05 | 0.05 | 0.05 | 0.05 | 0.05 | 0.05 |
| Polymerization inhibitor | | UV10 | 0.1 | 0.1 | 0.1 | 0.1 | 0.1 | 0.1 | 0.1 | 0.1 | 0.1 | 0.1 | 0.1 | 0.1 | 0.1 | 0.1 |
| Photopolymerization initiator | α cleavage type | IRGACURE 819 (Mw:418) | | | | | 4.0 | 4.0 | 4.0 | 4.0 | | | 4.0 | 4.0 | 4.0 | 4.0 |
| | | IRGACURE 184 (Mw:207) | 5.0 | 5.0 | 5.0 | 5.0 | | | | | 5.0 | 5.0 | | | | |
| | Hydrogen abstraction type | SPEEDCURE ITX (Mw:254) | | | | | | | | | | | | | 2.0 | 2.0 |
| | | KAYACURE BMS (Mw:304) | | | | | | | | | | | | | | |
| | | SPEEDCURE 7010-L (Mw:1839) | | | | | | | | | | | | | | |
| | | GENOPOL TX-1 (Mw:824) | | | | | | | | | | | | | | |
| | | Omnipol BP(Mw:960) | 3.0 | 3.0 | 3.0 | 3.0 | | | | | | | | | | |
| Amine-based compound | | SPEEDCURE EHA (Mw:277) | | | | | | | | | | | | | | |
| | | CN371(Mw:513<) | | | 5.0 | 5.0 | | | 5.0 | 5.0 | 5.0 | 5.0 | | | | |

### <Examples 1 to 15 and Comparative Examples 1 to 3>

Inks 1 to 28 prepared as described above were appropriately combined as ink sets as shown in Table 3. Each of these ink sets was used to perform image formation as described in <Evaluation Methods> below, and surface curability, uniformity of glossiness, and fold crack resistance of the inks contained in each of the ink sets were evaluated. Incidentally, a light source used for curing the inks, and an accumulated amount of radiation (for each ink) irradiated from the light source were set as shown in Table 3.

Here, an LED light source (manufactured by Kyocera Corporation) had a peak wavelength of 395 nm, illuminance on a recording medium of 2 W/cm², an accumulated amount of radiation of 250 mJ/cm², 300 mJ/cm² or 500 mJ/cm². Besides, a metal halide light source (manufactured by Integration Technology, trade name: SUB ZEO 085) had illuminance on a recording medium of 700 mW/cm², and an accumulated amount of radiation of 200 mJ/cm².

### <Evaluation Methods>

### [Surface Curability]

A one-pass image (16 cm x 4 cm) was formed by continuously forming solid images (each 4 cm x 4 cm) of yellow, black, magenta and cyan with an ink application amount of 9 g/m² on cast coated paper for paperware (NEW Mariest W, basis weight: 315 g/m², manufactured by Hokuetsu Kishu Paper, Co., Ltd.).

A test piece was moved at a prescribed speed on the thus obtained solid image (16 cm x 4 cm), and dynamic friction coefficients (surface stickiness of the printed image) of the respective colors were calculated on the basis of change in value obtained with a force gauge (manufactured by Imada Co., Ltd.). A load of 200 g per area of 25 mm x 25 mm of the used printing paper, NEW Mariest W, was applied to the test piece. Evaluation was performed as follows:
A: A difference in the dynamic friction coefficient among the colors is less than 0.1.
B: A difference in the dynamic friction coefficient among the colors is 0.1 or more and less than 0.2.
C: A difference in the dynamic friction coefficient among the colors is 0.2 or more and less than 0.3.
D: A difference in the dynamic friction coefficient among the colors is 0.3 or more.

### [Uniformity of Glossiness]

On cast coated paper for paperware (NEW Mariest W, basis weight: 315 g/m², manufactured by Hokuetsu Kishu Paper Co., Ltd.), natural images (JIS X 9201:2001, high definition color digital standard image data "fruit basket" and "cafeteria") were printed in an A4 size. The thus obtained images were visually observed for evaluation based on the following criteria:
A: Glossiness is uniform in all the printed images.
B: Although glossiness is partly degraded in one printed image, the glossiness is uniform as a whole.
C: Although glossiness is partly degraded in the two printed images, the glossiness is uniform as a whole in both the images.
D: Glossiness is obviously degraded in most portions of the two printed images, and the glossiness is ununiform as a whole in both the images.

### [Fold Crack Resistance]

A one-pass image (16 cm x 4 cm) was formed by continuously forming solid images (each 4 cm x 4 cm) of yellow, black, magenta and cyan with an ink application amount of 9 g/m² on cardboard for paperware (OK Ball, basis weight: 400 g/m², manufactured by Oji Materia Co., Ltd.).

The thus obtained image was subjected to a bending test in accordance with JIS K5400 by using a paint film bending tester PI-801, manufactured by Tester Sangyo Co., Ltd. In the test, a bending axis with a diameter ϕ of 2 m was used.
B: A coating film is peeled on a bent surface in none of the images.
C: A coating film is peeled on a bent surface in the black image.
D: A coating film is peeled on a bent surface in the black and yellow images.

**[Table 3]**

| | Ink set | | | | Curing conditions | | Evaluation | | |
|---|---|---|---|---|---|---|---|---|---|
| | CYAN | MAGENTA | YELLOW | BLACK | Light source | Accumulated amount of radiation (mJ/cm²) | Surface curability | Uniformity of glossiness | Fold crack resistance |
| Example 1 | INK 1 | INK 2 | INK 19 | INK 20 | LED | 300 | C | C | B |
| Example 2 | INK 3 | INK 4 | INK 19 | INK 20 | LED | 300 | B | B | B |
| Example 3 | INK 5 | INK 6 | INK 19 | INK 20 | LED | 300 | B | A | B |
| Example 4 | INK 7 | INK 8 | INK 19 | INK 20 | LED | 300 | B | A | B |
| Example 5 | INK 9 | INK 10 | INK 19 | INK 20 | LED | 300 | A | B | B |
| Example 6 | INK 11 | INK 12 | INK 19 | INK 20 | LED | 300 | A | A | B |
| Example 7 | INK 13 | INK 14 | INK 23 | INK 24 | METAL HALIDE | 200 | C | C | B |
| Example 8 | INK 15 | INK 16 | INK 23 | INK 24 | METAL HALIDE | 200 | C | B | B |
| Example 9 | INK 17 | INK 18 | INK 23 | INK 24 | METAL HALIDE | 200 | B | B | B |
| Example 10 | INK 3 | INK 4 | INK 19 | INK 20 | LED | 500 | A | C | B |
| Example 11 | INK 11 | INK 12 | INK 21 | INK 22 | LED | 250 | A | A | B |
| Comparative Examples 1 | INK 25 | INK 26 | INK 19 | INK 20 | LED | 300 | D | D | B |
| Comparative Examples 2 | INK 3 | INK 4 | INK 27 | INK 28 | LED | 300 | B | D | D |
| Comparative Examples 3 | INK 3 | INK 4 | INK 27 | INK 28 | LED | 500 | A | C | C |
| Example 12 | INK 11 | | INK 21 | | LED | 300 | A | A | B |
| Example 13 | INK 11 | | | INK 22 | LED | 300 | A | A | B |
| Example 14 | | INK 12 | INK 21 | | LED | 300 | A | A | B |
| Example 15 | | INK 12 | | INK 22 | LED | 300 | A | A | B |

As shown in Table 3, the curability and the uniformity of glossiness were good and fold crack was minimally caused in the ink sets in each of which the cyan ink and the magenta ink containing the colorants having the phthalocyanine structure or the quinacridone structure contain the hydrogen abstraction photopolymerization initiator, and the yellow ink and the black ink containing the colorants having neither the phthalocyanine structure nor the quinacridone structure do not contain the hydrogen abstraction photopolymerization initiator (i.e., Examples 1 to 15).

On the contrary, in the case where the cyan ink and the magenta ink containing the colorant having the phthalocyanine structure or the quinacridone structure do not contain the hydrogen abstraction photopolymerization initiator (Comparative Example 1), the uniformity of glossiness was lowered, and the surface curability of the cyan ink and the magenta ink was degraded. It is presumed that the curing inhibition owing to oxygen was caused in curing the cyan ink and the magenta ink.

On the other hand, in the case where the yellow ink and the black ink containing the colorants having neither the phthalocyanine structure nor the quinacridone structure contain the hydrogen abstraction photopolymerization initiator, the internal curability of the yellow ink and the black ink was so low that the fold crack was easily caused (particularly in Comparative Example 2). If the amount of the actinic radiation was larger than in Comparative Example 2 (as in Comparative Example 3), although the fold crack resistance of the yellow ink and the black ink was improved, the uniformity of glossiness was degraded. It is presumed that gel crystal present on the surface was melted because the coating films of the cyan ink and the magenta ink were irradiated with excessive energy, and hence the surfaces of these coating films were roughened.

Incidentally, when ink A and ink B each containing the photopolymerization initiator having a molecular weight of 400 or more are used (as in, for example, Examples 11 to 15), good glossiness was particularly easily obtained. It is presumed that the photopolymerization initiator was difficult to bleed out on the surface of an image, and hence the glossiness of the image could be retained. Besides, since such ink A and ink B contain the amine-based curing agent, the curability of these inks was good and the fold crack was minimally caused.

The disclosure of Japanese Patent Application No. 2015-193185, filed on September 30, 2015, including the specification and abstract, is incorporated herein by reference in its entirety.

### Industrial Applicability

According to the ink set of the present invention, all inks contained therein have good curability, and all the inks can be homogeneously cured under the same curing conditions. Accordingly, the ink set of the present invention and the image forming method using the same are applicable to formation of various images.

## Claims

1. An ink set, comprising at least an ink A and an ink B, each of the ink A and the ink B containing a photocurable compound, a photopolymerization initiator, a gelling agent, and a colorant, and being cured through irradiation with actinic radiation,
wherein the colorant has a phthalocyanine structure or a quinacridone structure, and the photopolymerization initiator is a composition containing a hydrogen abstraction photopolymerization initiator in the ink A, and
the colorant has neither a phthalocyanine structure nor a quinacridone structure, and the photopolymerization initiator is a composition containing the hydrogen abstraction photopolymerization initiator in an amount less than 0.1mass% with respect to a total mass of the ink B in the ink B.

2. The ink set according to claim 1, wherein the photopolymerization initiator has a molecular weight of 400 or more.

3. The ink set according to claim 1 or 2, wherein the hydrogen abstraction photopolymerization initiator is a thioxanthone-based compound.

4. The ink set according to any one of claims 1 to 3, wherein the ink A and/or the ink B further contains an amine-based compound.

5. The ink set according to any one of claims 1 to 4, wherein the ink A is a cyan ink or a magenta ink.

6. The ink set according to any one of claims 1 to 5, wherein the ink B is a yellow ink, a black ink, or a white ink.

7. An image forming method, comprising:
discharging the ink A and the ink B comprised in the ink set according to any one of claims 1 to 6 from inkjet nozzles and causing the inks to land on a recording medium; and
curing the ink A and the ink B by irradiating, with actinic radiation, the ink A and the ink B landed on the recording medium.

8. The image forming method according to claim 7, wherein the actinic radiation has a peak wavelength at 365 nm or more and 405 nm or less.

## Patentansprüche

1. Tintensatz, welcher zumindest eine Tinte A und eine Tinte B umfasst, wobei die Tinte A und die Tinte B jeweils eine photohärtbare Verbindung, einen Photopolymerisationsinitiator, ein Geliermittel und ein Färbemittel enthalten und durch Bestrahlen mit aktinischer Strahlung gehärtet werden,
wobei in der Tinte A das Färbemittel eine Phthalocyanin-Struktur oder eine Chinacridon-Struktur aufweist und es sich bei dem Photopolymerisationsinitiator um eine einen Wasserstoffabstraktionsphotopolymerisationsinitiator enthaltende Zusammensetzung handelt, und
in der Tinte B das Färbemittel weder eine Phthalocyanin-Struktur noch eine Chinacridon-Struktur aufweist und es sich bei dem Photopolymerisationsinitiator um eine den Wasserstoffabstraktionsphotopolymerisationsinitiator in einer Menge von weniger als 0.1 Masse%, bezogen auf die Gesamtmasse der Tinte B, enthaltende Zusammensetzung handelt.

2. Tintensatz gemäß Anspruch 1, wobei der Photopolymerisationsinitiator ein Molekulargewicht von 400 oder mehr aufweist.

3. Tintensatz gemäß Anspruch 1 oder 2, wobei es sich bei dem Wasserstoffabstraktionsphotopolymerisationsinitiator um eine Thioxanthon-basierte Verbindung handelt.

4. Tintensatz gemäß einem der Ansprüche 1 bis 3, wobei die Tinte A und/oder die Tinte B weiterhin eine Amin-basierte Verbindung enthält.

5. Tintensatz gemäß einem der Ansprüche 1 bis 4, wobei es sich bei der Tinte A um eine cyanfarbene Tinte oder eine magentafarbene Tinte handelt.

6. Tintensatz gemäß einem der Ansprüche 1 bis 5, wobei es sich bei der Tinte B um eine gelbe Tinte, eine schwarze Tinte oder eine weiße Tinte handelt.

7. Bilderzeugungsverfahren, umfassend:
Ausstoßen der von dem Tintensatz gemäß einem der Ansprüche 1 bis 6 umfassten Tinte A und Tinte B aus Tintenstrahldüsen sowie Herbeiführen eines Auftreffens der Tinten auf einem Aufzeichnungsmedium; und
Härten der Tinte A und der Tinte B durch Bestrahlen der auf dem Aufzeichnungsmedium aufgetroffenen Tinte A und Tinte B mit aktinischer Strahlung.

8. Bilderzeugungsverfahren gemäß Anspruch 7, wobei die aktinische Strahlung eine Peakwellenlänge von 365 nm oder mehr und 405 nm oder weniger aufweist.

## Revendications

1. Jeu d'encres, comprenant au moins une encre A et une encre B, chacune de l'encre A et de l'encre B contenant un composé photodurcissable, un initiateur de photopolymérisation, un agent gélifiant et un colorant, et étant durcie par irradiation avec un rayonnement actinique,
dans lequel le colorant a une structure phtalocyanine ou une structure quinacridone, et l'initiateur de photopolymérisation est une composition contenant un initiateur de photopolymérisation par abstraction d'hydrogène dans l'encre A, et
le colorant n'a ni une structure phtalocyanine, ni une structure quinacridone, et l'initiateur de photopolymérisation est une composition contenant l'initiateur de photopolymérisation par abstraction d'hydrogène en une quantité inférieure à 0,1 % en masse par rapport à la masse totale de l'encre B dans l'encre B.

2. Jeu d'encres selon la revendication 1, dans lequel l'initiateur de photopolymérisation a une masse moléculaire de 400 ou plus.

3. Jeu d'encres selon la revendication 1 ou 2, dans lequel l'initiateur de photopolymérisation par abstraction d'hydrogène est un composé à base de thioxanthone.

4. Jeu d'encres selon l'une quelconque des revendications 1 à 3, dans lequel l'encre A et/ou l'encre B comprennent en outre un composé à base d'amine.

5. Jeu d'encres selon l'une quelconque des revendications 1 à 4, dans lequel l'encre A est une encre cyan ou une encre magenta.

6. Jeu d'encres selon l'une quelconque des revendications 1 à 5, dans lequel l'encre B est une encre jaune, une encre noire ou une encre blanche.

7. Procédé de formation d'image, comprenant :
la projection de l'encre A et de l'encre B comprises dans le jeu d'encres selon l'une quelconque des revendications 1 à 6 à partir de buses pour jet d'encre et le fait de provoquer le dépôt des encres sur un support d'impression ; et
le durcissement de l'encre A et de l'encre B par irradiation, avec un rayonnement actinique de l'encre A et de l'encre B déposées sur le support d'impression.

8. Procédé de formation d'image selon la revendication 7, dans lequel le rayonnement actinique a une longueur d'onde optimale à 365 nm ou plus et 405 nm ou moins.
